# FASCICULE DE BREVET EUROPEEN

(11) **EP 3 589 536 B1**
(45) Date de publication et mention de la délivrance du brevet: **28.07.2021**
(21) Numéro de dépôt: 18712952.3
(22) Date de dépôt: 02.03.2018
(51) Int. Cl.: B62H 3/00, B62H 1/12, B62M 6/40, B62J 17/083, G07F 17/00, B62M 7/14

(54) **STRUCTURE COMPLÉMENTAIRE POUR VÉLO ET STATION POUR SA MISE À DISPOSITION**
KOMPLEMENTÄRE STRUKTUR FÜR EIN FAHRRAD UND STATION ZUR BEREITSTELLUNG DERSELBEN
COMPLEMENTARY STRUCTURE FOR BICYCLE AND STATION FOR SUPPLYING SUCH A STRUCTURE

(30) Priorité: 02.03.2017 FR 1751714
(43) Date de publication de la demande: 08.01.2020
(73) Titulaire: Roques, Sébastien, 45160 Olivet (FR)
(72) Inventeur: Roques, Sébastien, 45160 Olivet (FR)
(74) Mandataire: Cornuejols, Georges
(86) Numéro de dépôt international: PCT/FR2018/050489
(87) Numéro de publication internationale: WO 2018/158550

(56) Documents cités:
- CN-U- 201 729 204
- CN-U- 205 273 751
- DE-A1- 3 517 967
- FR-A1- 2 824 942
- FR-A1- 3 001 701
- FR-A1- 3 026 213
- NL-C2- 1 007 497
- US-A- 2 750 206

## Description

### DOMAINE TECHNIQUE DE L'INVENTION

La présente invention vise une structure complémentaire pour vélo et une station pour la mise à disposition d'une telle structure complémentaire pour des cyclistes.

Le domaine de l'invention est celui de la conception et de la fabrication des équipements de vélos et des services collectifs pour les usagers.

Plus précisément, l'invention concerne une solution de mobilité visant à améliorer les conditions d'utilisation d'un vélo par un cycliste.

### ÉTAT DE LA TECHNIQUE

Dans le domaine de l'invention, on définit un vélo ou une « bicyclette » comme étant un véhicule comportant un cadre, et deux roues alignées permettant à une personne (aussi nommée cycliste), d'avancer en actionnant un pédalier qui entraîne en rotation la roue arrière du vélo.

Les vélos constituent une solution particulièrement adaptée à un mode de transport en ville. Comparativement à d'autres modes de transport (les véhicules motorisés) qui sont bruyants, polluants et qui consomment des énergies fossiles, les vélos ne provoquent pas ou peu de pollution lors de leur utilisation. Ainsi, selon une conception classique du vélo, seule l'énergie du cycliste est nécessaire pour mettre en mouvement le vélo.

Les vélos n'offrent cependant pas les mêmes avantages que d'autres solutions de mobilité.

Les vélos peuvent notamment se montrer trop fatiguant à utiliser pour franchir des distances importantes. Ainsi, il a été proposé d'intégrer des assistances électriques sur les vélos pour faciliter le pédalage. Ces solutions d'assistance électrique sont soit conçues pour équiper un vélo dès sa fabrication, soit conçues pour équiper un vélo postérieurement à son achat. On connaît ainsi :
- des vélos intégrant de série un système d'assistance électrique ; et
- des kits permettant d'intégrer un moteur électrique sur un vélo ou de remplacer une roue d'un vélo par une roue électrifiée.

De telles solutions d'assistance électrique fournissent une aide particulièrement appréciable pour un cycliste mais ne sont pas tout le temps nécessaires, et ce notamment en fonction de l'utilisation qu'un cycliste veut faire de son vélo.

Ainsi, lorsque le cycliste souhaite se déplacer sans assistance électrique, les moyens moteurs et la batterie d'alimentation de l'assistance électrique engendrent un surpoids et des efforts supplémentaires pour le cycliste.

Par ailleurs, les vélos ne présentent pas de protection pour le cycliste vis-à-vis des intempéries et de la circulation. Plus particulièrement, vis-à-vis des intempéries, comparé à une personne évoluant dans une voiture et qui est protégée de la pluie et du vent par la carrosserie de la voiture, un cycliste est directement exposé à ces conditions climatiques.

Il a été proposé des équipements qui permettent d'équiper les vélos pour les protéger. De telles protections doivent être assemblées sur un vélo et peuvent prendre la forme de structures souples destinées à protéger un cycliste, par exemple en fournissant un pare-brise.

Ces équipements à fixer sur un vélo présentent néanmoins des inconvénients :
- ces équipements ne sont pas pratiques du fait de l'installation préalable fastidieuse à réaliser sur le vélo ;
- la protection conférée par ces équipements n'est pas performante comparée à la protection offerte par la carrosserie d'une voiture ; et
- ces équipements peuvent déséquilibrer le vélo (poids, prise au vent, ...).

On connaît également des vélos ou des tricycles (plus stables) qui ont été conçus directement en intégrant un carénage apte à protéger le cycliste.

Ce deuxième type de solution n'est néanmoins peu voire pas modulable.

Vis-à-vis de la stabilité des cycles non motorisés et tel qu'évoqué précédemment, les véhicules employant au moins trois roues (tricycles) présentent une meilleure stabilité.

Pour les vélos, des roues additionnelles peuvent être fixées sur le cadre, à proximité de la roue arrière. Ces roues additionnelles visent à stabiliser un vélo dans une position verticale et nécessitent une opération de désinstallation pour pouvoir être enlevées. De telles roues additionnelles permettent de simplifier l'apprentissage du vélo par des personnes débutantes, ces personnes débutantes n'ayant à gérer l'équilibre que de manière extrêmement limitée.

On connait la demande de certificat d'utilité chinois CN 201 729 204 qui divulgue des stations de parking de vélos.

La station divulguée par CN 201 729 204 U comprend les caractéristiques du préambule de la revendication 1.

### OBJET DE L'INVENTION

L'invention vise à pallier tout ou partie de ces inconvénients. Plus précisément, l'invention a pour objectif de proposer une solution visant à améliorer les conditions d'utilisation d'un vélo.

L'invention a également pour objectif de proposer une telle solution qui améliore la protection d'un cycliste utilisant un vélo tout en ne dégradant pas ou peu la stabilité du vélo.

A cet effet, la présente invention vise une station, qui comporte :
- au moins une structure complémentaire pour un vélo comportant au moins deux roues, ladite au moins une structure complémentaire comportant :
   - au moins une roue additionnelle,
   - un châssis sur lequel est couplée ladite au moins une roue additionnelle ;
   - des moyens de couplage portés par le châssis et aptes à coupler de manière réversible le vélo au châssis,
   le châssis comportant un espace d'accueil du vélo dans lequel les moyens de couplage sont aptes à solidariser ensemble le châssis au vélo ;
- au moins un plot d'attache à ladite au moins une structure complémentaire, ledit au moins un plot d'attache étant apte à maintenir ladite au moins une structure complémentaire dans une position d'attente de couplage audit vélo ; la station étant caractérisée par :
- au moins un dispositif électronique de mise à disposition de ladite au moins une structure complémentaire apte à entraîner la libération de la structure complémentaire par ledit au moins un plot d'attache une fois le vélo couplé à l'intérieur de l'espace d'accueil du châssis de ladite au moins structure complémentaire par les moyens de couplage.

Grâce à une telle station, un cycliste peut disposer, à la demande, d'une structure complémentaire, pour avec son vélo de base, bénéficier d'une structure dans laquelle il peut coupler transitoirement son vélo pour bénéficier d'un élément d'assistance électrique ou de carénage apte à le protéger de conditions climatiques et/ou de la circulation, ainsi que de roues additionnelles qui vont lui permettre d'avoir une meilleure stabilité. En d'autres termes, cette structure complémentaire et cette station augmentent les fonctionnalités dont dispose le vélo de l'utilisateur.

Grâce aux moyens de couplage et à leur manière de coupler réversiblement le vélo sur le châssis de la structure complémentaire, le vélo de l'utilisateur peut être utilisé de manière classique suite à l'utilisation de la structure complémentaire et de son découplage avec le vélo. La structure complémentaire permet ainsi d'améliorer les conditions d'utilisation d'un vélo.

Dans des modes de réalisation, ladite au moins une structure complémentaire comporte au moins un élément de carénage entourant au moins partiellement l'espace d'accueil.

Le cycliste peut ainsi être protéger des intempéries ou des chocs avec des véhicules ou des objets fixes.

Dans des modes de réalisation, ledit au moins un élément de carénage ceinture l'espace d'accueil jusqu'à un passage d'insertion du vélo pour l'engager dans l'espace d'accueil.

La mise en place du vélo dans une structure complémentaire est ainsi facilitée. Le passage d'insertion est ménagé dans la structure complémentaire par l'intermédiaire des éléments de carénage qui encadrent ce passage d'insertion.

En conséquence, l'utilisateur qui souhaite équiper son vélo de la structure complémentaire doit insérer le vélo dans l'espace d'accueil par l'intermédiaire du passage d'insertion.

Dans des modes de réalisation, l'élément de carénage comporte un pare-brise.

Un tel pare-brise permet de protéger efficacement un cycliste situé dans l'espace d'accueil vis-à-vis des conditions climatiques. La présence des roues additionnelles permet de compenser la présence d'un tel pare-brise au niveau de la stabilité du vélo.

Dans le cas où le ou les éléments de carénage ceinturent l'espace d'accueil et comportent un pare-brise, la structure complémentaire forme une capsule offrant une grande protection à son occupant.

Dans des modes de réalisation, les moyens de couplage sont configurés pour permettre un débattement selon un axe vertical du vélo dans ladite au moins une structure complémentaire.

Le couplage mécanique du vélo et de la structure complémentaire conserve ainsi une souplesse réduisant les risques de rupture, notamment dans le cas d'une chaussée déformée.

Une telle configuration des moyens de couplage permet d'absorber d'éventuelles différences de niveau entre la structure complémentaire et le vélo une fois en circulation. De tels moyens de couplage permettent également d'ajuster en hauteur le couplage du vélo par rapport à la structure complémentaire autorisant ainsi l'utilisation de vélos de différentes dimensions.

Dans des modes de réalisation, les moyens de couplage comportent un adaptateur d'accroche au cadre du vélo. Grâce à ces dispositions, aucune installation d'adaptateur n'est nécessaire avant de coupler une structure complémentaire.

Dans des modes de réalisation, les moyens de couplage comportent au moins un bras de liaison s'étendant à partir du châssis pour s'accoupler avec le cadre du vélo. Un tel bras de liaison, également configuré pour permettre un débattement selon un axe vertical du vélo dans la structure complémentaire, offre une solution simple à mettre en oeuvre pour réaliser le couplage.

Dans des modes de réalisation, ledit au moins un bras de liaison est configuré pour s'accoupler avec un adaptateur fixé à demeure sur le cadre du vélo. Grâce à ces dispositions, le vélo est spécifiquement adapté pour se coupler avec une structure complémentaire.

De cette manière, la liaison mécanique réalisée lors du couplage du vélo à la structure complémentaire est particulièrement sécurisée du fait de l'installation préalable de l'adaptateur sur le cadre du vélo.

Préférentiellement, cet adaptateur est fixé sur la colonne de direction du cadre du vélo. Cette colonne de direction (prenant la forme d'un tube muni de roulements à billes) accueille l'arbre de direction qui est couplé au guidon du vélo et à la fourche du vélo.

Un autre adaptateur, un adaptateur secondaire, peut être fixé à proximité de la selle, sur le cadre du vélo.

La présence d'un adaptateur principal (fixé sur la colonne de direction du vélo) et d'un adaptateur secondaire forme une solution de couplage en deux points permettant de limiter les efforts de torsion s'appliquant sur le point de fixation avant. En effet, lorsqu'un vélo est couplé dans la structure complémentaire, il est destiné à être maintenu droit dans la structure complémentaire. En conséquence, des efforts de torsion peuvent apparaître quand une personne utilise le vélo installé dans la structure complémentaire.

Ce système de fixation en deux points permet également de garantir le bon alignement du vélo dans la structure complémentaire.

Dans des modes de réalisation, l'adaptateur comporte un dispositif électronique d'identification comportant un identifiant, le dispositif électronique de mise à disposition étant apte à reconnaître l'identifiant et à autoriser le couplage du vélo au châssis par l'intermédiaire des moyens de couplage. Grâce à ces dispositions, l'utilisateur n'a qu'à présenter le vélo muni de l'adaptateur pour provoquer la libération d'une structure complémentaire. Un tel dispositif électronique d'identification et un tel dispositif électronique complémentaire permettent de sécuriser l'utilisation de la structure complémentaire.

Dans des modes de réalisation, l'adaptateur comporte un dispositif électronique d'identification comportant un identifiant, ladite au moins une structure complémentaire comportant un dispositif électronique complémentaire apte à reconnaître l'identifiant et à autoriser le couplage du vélo au châssis par l'intermédiaire des moyens de couplage. Grâce à ces dispositions, l'utilisateur n'a qu'à présenter le vélo muni de l'adaptateur pour provoquer la libération d'une structure complémentaire.

Dans des modes de réalisation, le dispositif électronique de mise à disposition comporte un moyen de communication avec un terminal portable communicant pour autoriser le couplage du vélo au châssis par l'intermédiaire des moyens de couplage en fonction des informations échangées avec le terminal mobile communicant. Grâce à ces dispositions, l'utilisateur n'a qu'à mettre en communication son ordiphone avec le dispositif électronique pour provoquer la libération d'une structure complémentaire.

Dans des modes de réalisation, ladite au moins une structure complémentaire comporte une assistance électrique au pédalage, l'assistance électrique comportant :
- au moins un moteur électrique apte à entraîner en rotation ladite au moins une roue additionnelle ;
- au moins une batterie électrique.

Grâce à ces dispositions, l'utilisateur peut bénéficier d'une motorisation électrique, même si son vélo en est dépourvu. Ces modes de réalisation permettent à un cycliste de disposer d'une structure complémentaire qui, en plus de la protection et de la stabilité qu'elle confère, permet de bénéficier d'une assistance électrique facilitant le pédalage du cycliste.

La structure complémentaire selon l'invention forme ainsi une solution particulièrement avantageuse dans le domaine des modes de transport adapté à la ville (respect de l'environnement, distance franchissable élevée, protection, ...).

Dans des modes de réalisation, ladite au moins une structure complémentaire comporte des moyens de détection d'un actionnement d'un pédalier du vélo. Grâce à ces dispositions, seule une assistance électrique est fournie et non une motorisation autonome.

Dans des modes de réalisation, les moyens de détection comportent un capteur de rotation de pédalier à installer sur le vélo. Grâce à ces dispositions, un vélo sans assistance électrique peut être transformé en vélo avec assistance électrique mise à disposition par une station.

Dans des modes de réalisation, les moyens de détection comportent un capteur de rotation incorporé au vélo. Grâce à ces dispositions, un vélo à assistance électrique, qui comporte un tel capteur, peut être couplé à une structure complémentaire qui fournit automatiquement une assistance électrique complémentaire.

Dans des modes de réalisation, l'adaptateur et le bras de liaison comportent des connectiques complémentaires aptes à établir une connexion entre le capteur de rotation et la commande de l'au moins un moteur électrique lors du couplage du vélo au châssis par l'intermédiaire des moyens de couplage.

Grâce à ces dispositions, le couplage électrique du capteur de rotation du pédalier et de l'assistance électrique de la structure complémentaire est facilité et réalisé par le seul couplage du vélo à une structure complémentaire. Une telle conception de l'adaptateur et du bras de liaison comportant des connectiques complémentaires permet également de fiabiliser le couplage d'un vélo pré-équipé à la structure complémentaire.

Dans des modes de réalisation, l'adaptateur et le bras de liaison comportent des connectiques complémentaires aptes à établir une connexion entre une poignée de commande de motorisation d'un guidon du vélo et la commande de l'au moins un moteur électrique lors du couplage du vélo au châssis par l'intermédiaire des moyens de couplage. Grâce à ces dispositions, le couplage électrique de la poignée de commande et de l'assistance électrique de la structure complémentaire est facilité et réalisé par le seul couplage du vélo à une structure complémentaire.

Dans des modes de réalisation, le châssis comporte des bras latéraux portant chacun une desdites roues additionnelles, et un assemblage déformable solidaire du cadre du vélo après couplage du vélo au châssis par l'intermédiaire des moyens de couplage, la déformation de l'assemblage déformable correspondant à un mouvement relatif des bras latéraux conservant les bras latéraux parallèles au plan du cadre du vélo et à l'inclinaison des roues additionnelles parallèlement aux roues du vélo. Grâce à ces dispositions, la déformation du châssis épouse l'inclinaison du vélo dans les virages ou sur une chaussée inclinée latéralement.

Dans des modes de réalisation, l'assemblage déformable comporte des parallélogrammes formés de bras montés mobiles en rotation autour d'axes de rotation parallèle à la direction de déplacement du vélo.

Ces dispositions assurent un confort de conduite au cycliste situé sur le vélo dans l'espace d'accueil. En effet, un cycliste est habitué à s'incliner dans les virages avec son vélo. Grâce aux dispositifs de suspension, le vélo et la structure complémentaire peuvent également s'incliner dans les virages, conformément aux habitudes du cycliste.

### BRÈVE DESCRIPTION DES FIGURES

D'autres avantages, buts et caractéristiques de l'invention ressortiront de la description qui va suivre faite, dans un but explicatif et nullement limitatif, en regard des dessins annexé dans lesquels :
- la figure 1 est une représentation schématique vue de côté d'un premier mode de réalisation d'une structure complémentaire objet de l'invention avec un vélo inséré dans l'espace d'accueil et couplé à la structure complémentaire ;
- les figures 2, 3 et 4 sont des représentations schématiques de la structure complémentaire illustrée en figure 1, selon respectivement une vue en perspective, une vue de face et une vue du dessus ;
- la figure 5 illustre, en vue de côté, l'utilisation de la structure complémentaire illustrée en figures 1 à 4 ;
- la figure 6 illustre un adaptateur principal de modes de réalisation de la structure complémentaire objet de l'invention, installé sur la colonnede direction d'un cadre de vélo ;
- la figure 7 illustre un adaptateur secondaire de modes de réalisation de la structure complémentaire objet de l'invention, fixé sur le cadre d'un vélo, en dessous de la selle du vélo ;
- la figure 8 illustre le couplage d'un vélo à une structure complémentaire objet de l'invention ;
- la figure 9 est une représentation schématique d'une station selon l'invention, avec des structures complémentaires objets de l'invention prêtes à être utilisées ;
- la figure 10 représente, partiellement et en perspective, un vélo muni d'un deuxième mode de réalisation d'une structure complémentaire objet de l'invention ;
- la figure 11 représente, en perspective, un vélo muni d'un châssis à système de suspension d'une structure complémentaire illustrée en figure 10 ;
- la figure 12 représente, en vue de face, un vélo muni d'une structure complémentaire, dans une position inclinée sur le côté ;
- la figure 13 représente, en perspective, un système de couplage de modes de réalisation de la structure complémentaire objet de l'invention sur un vélo ; et
- la figure 14 représente, en perspective, une partie du système de couplage illustré en figure 13.

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

Dans la description qui suit, on décrit des modes de réalisation de structure complémentaire pour un vélo objet de l'invention, structures qui comportent deux roues additionnelles. Cependant, la présente invention ne se limite pas à ces modes de réalisation, mais couvre aussi les structures complémentaires comportant une seule roue additionnelle (comme un side-car) ou au moins trois roues additionnelles (assurant la stabilité de la structure complémentaire même en l'absence de vélo). Ces modes de réalisation étant aisément réalisés par l'homme du métier sur la base de la description qui va suivre, ils ne sont pas décrits individuellement.

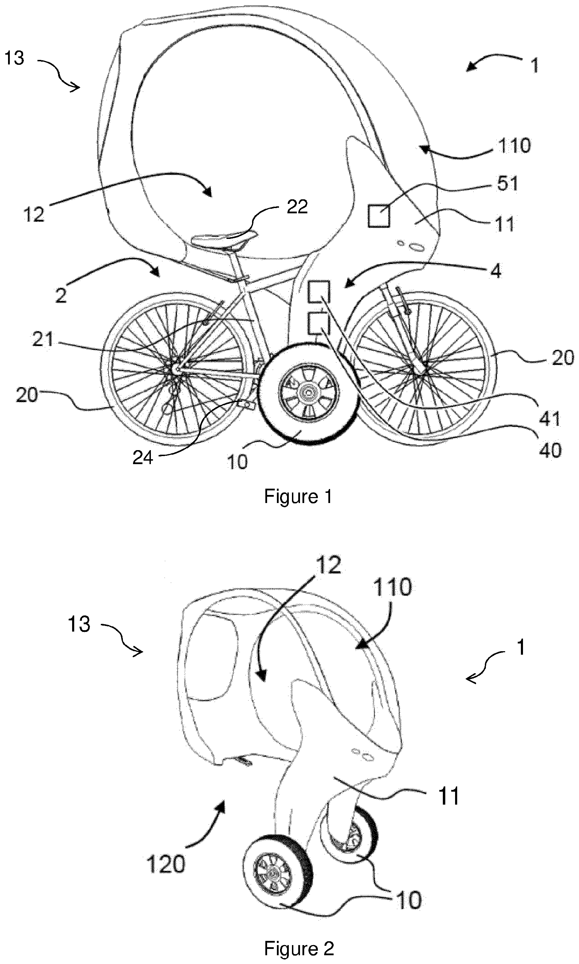

On observe, en figures 1 à 8, une structure complémentaire 1 pour un vélo 2.

Le vélo 2 est un vélo de type connu, qui comporte :
- deux roues 20, soit une roue avant et une roue arrière,
- un cadre 21, comportant un tube oblique 27,
- une selle 22,
- un guidon 23 couplé à la roue avant et mobile en rotation par rapport à une colonne de direction 26 du cadre 21 du vélo 2, et
- un pédalier 24 apte à entraîner en rotation la roue arrière.

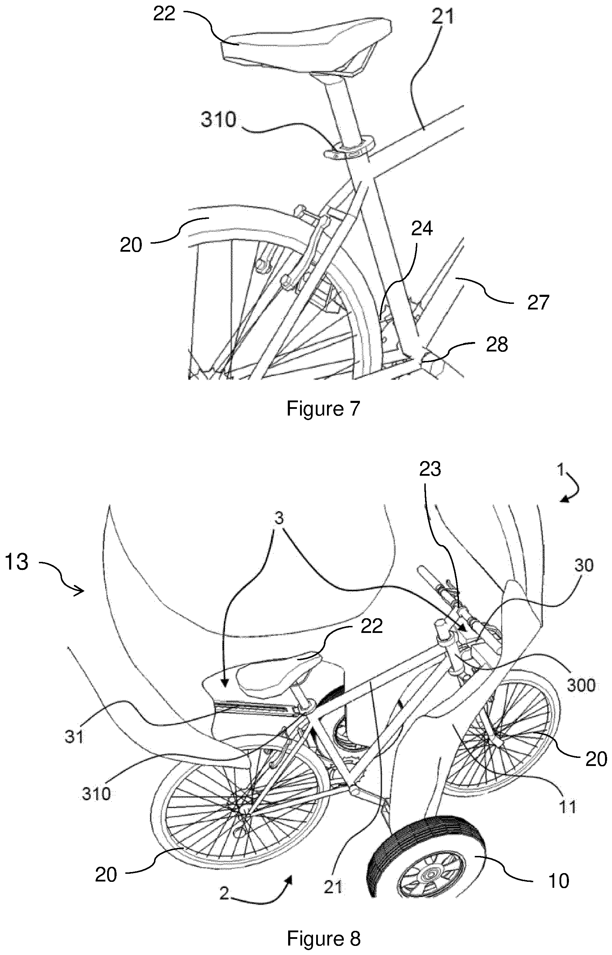

De manière connue, le tube oblique 27 relie la colonne de direction 26 à un support 28 du pédalier 24 (voir figure 7).

La structure complémentaire 1 comporte un châssis 11 sur lequel sont couplées deux roues additionnelles 10.

Le châssis 11 entoure, c'est-à-dire présente une concavité qui comporte également un espace d'accueil 12 pour au moins une partie du vélo 2 (dans ce premier mode de réalisation, cette partie comporte le guidon 23, la colonne de direction 26 et une partie du cadre du vélo 2). Pour équiper le vélo 2 avec la structure complémentaire 1, la structure complémentaire 1 comporte des moyens de couplage 3 (illustrés en figure 8) qui sont portés par le châssis 11 et qui sont aptes à coupler de manière réversible le vélo 2 au châssis 11.

Lors de l'insertion d'un vélo 2 dans l'espace d'accueil 12, tel qu'illustré en figure 1, les moyens de couplage 3 permettent de solidariser le cadre 21 du vélo 2 au châssis 11 de la structure complémentaire 1. Lorsque le vélo 2 est couplé au châssis 11, les roues additionnelles 10 stabilise le vélo 2 dans une position verticale avec le cadre 21 dans un plan vertical et les roues 20 en contact avec le sol.

Tel qu'illustré en figures 1 à 5, la structure complémentaire 1 comporte également des éléments de carénage 13 supportés par le châssis 11. Les éléments de carénage 13 entourent, au moins partiellement, l'espace d'accueil 12.

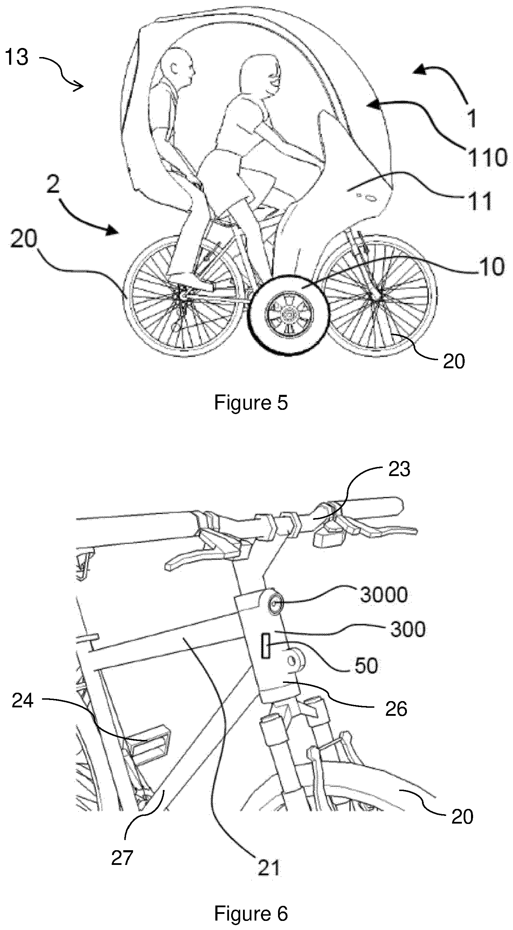

Tel qu'illustré par les figures 1, 2, 3 et 5, les éléments de carénage 13 comportent notamment un pare-brise 110. On observe en figure 5 que ce pare-brise 110 permet de protéger un ou plusieurs occupants de la structure complémentaire 1.

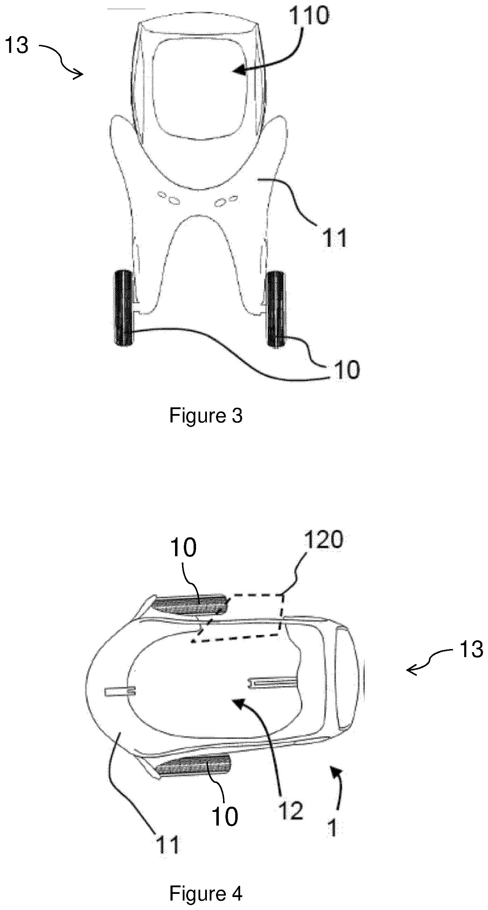

On observe en figure 4 que les éléments de carénage 13 définissent un passage d'insertion 120 du vélo 2 dans l'espace d'accueil 12. Ce passage d'insertion 120 permet d'engager le vélo 2 dans l'espace d'accueil 12 pour le solidariser au châssis 11. Les éléments de carénage 13 constituent une double protection à chaque occupant de la structure complémentaire 1. Cette protection protège des intempéries et limite les risques de contact direct de l'occupant de la structure complémentaire 1 avec un objet extérieur à la structure complémentaire 1.

Le passage d'insertion 120 est préférentiellement situé du côté du vélo 2 nécessitant le moins de protection. Par exemple, dans un pays où les voitures roulent à droite, le passage d'insertion est préférentiellement également situé à droite. Ainsi, si un véhicule vient au contact de la structure complémentaire 1 par son côté gauche, chaque occupant de la structure complémentaire 1 bénéficient d'une meilleure protection.

En référence aux figures 1 à 5, les éléments de carénage 13 présentent une forme de bulle ou de capsule.

En référence à la figure 5, les éléments de carénage 13 forment une assise arrière additionnelle. Cette assise additionnelle permet à une personne, notamment un enfant, d'être transportée à l'arrière de l'espace d'accueil 12.

Le châssis 11 et les éléments de carénage 13 peuvent également comporter un coffre. Préférentiellement, le coffre est refermé par un rabat qui forme l'assise additionnelle.

Dans des modes de réalisation, le châssis 11 est formé d'une armature en acier et en aluminium, et/ou les éléments de carénage 13 sont formés à l'aide d'un plastique rigide ou semi-rigide ainsi qu'à l'aide d'un matériau transparent pour former le pare-brise.

Dans des modes de réalisation, la structure complémentaire 1 comporte des accessoires (non représentés) parmi :
- des rétroviseurs,
- des phares avant,
- des phares arrière,
- une surface publicitaire,
- des essuie-glaces au niveau du pare-brise,
- un pare-soleil,
- des feux clignotants et/ou
- des feux stop.

En référence à la figure 1, la structure complémentaire 1 comporte également une assistance électrique 4 au pédalage. Cette assistance électrique 4 comporte :
- des moteurs électriques 40 aptes à entraîner en rotation les roues additionnelles 10,
- des batteries électriques 41 destinées à alimenter au moins les moteurs électriques 40 et
- des moyens de détection d'un actionnement du pédalier 24 du vélo 2.

Dans des modes de réalisation, ces moyens de détection d'un actionnement du pédalier 24 du vélo 2 comportent un capteur de rotation à installer sur le vélo 2 et plus précisément sur le pédalier 24 du vélo 2.

Un tel capteur de rotation peut consister en un disque muni d'aimants fixé au pédalier 24 et en un capteur de champ magnétique positionné sur le cadre 21, le pédalage entraînant l'activation du capteur par les aimants. Ce disque peut également avoir une fonction de générateur dynamoélectrique pour alimenter des organes électriques du vélo 2.

En cas de rétropédalage ou d'arrêt du pédalage, la structure complémentaire 1 peut être configurée pour freiner automatiquement, préférentiellement avec récupération d'énergie électrique.

Dans des modes de réalisation, les moyens de détection sont incorporés directement sur la structure complémentaire 1 sans avoir à nécessiter un pré-équipement du vélo 2. Différents exemples de tels moyens de détection sont détaillés en fin de description.

Dans des modes de réalisation, tels que celui illustré par la figure 5, la structure complémentaire 1 comporte également des dispositifs de suspension qui couplent les roues additionnelles 10 au châssis 11. Ces dispositifs de suspension stabilisent le vélo 2 dans une position verticale à l'arrêt et autorisent une inclinaison du vélo 2 et de la structure complémentaire 1 dans des virages.

En référence à la figure 8, les moyens de couplage 3 portés par le châssis 11 comportent des bras de liaison dont un bras de liaison avant 30 qui s'étend à partir du châssis 11 et un bras de liaison arrière 31 qui s'étend à partir de l'arrière des éléments de carénage 13. Ces bras de liaison s'étendent à partir de la structure additionnelle pour s'accoupler avec le cadre 21 du vélo 2.

Dans des modes de réalisation (non représentés), les moyens de couplage 3 sont conçus de manière à s'accoupler sur un vélo 2 non pré-équipé. Ces moyens de couplage 3 peuvent comporter des électro-aimants ou des systèmes de pinces mécaniques suffisamment puissants pour établir un couplage mécanique entre la structure complémentaire 1 et le cadre 21 du vélo 2 apte à résister aux contraintes s'exerçant lors de la mise en mouvement du vélo 2 et de la structure complémentaire 1.

Dans des modes de réalisation, tels que celui illustré par les figures 6, 7 et 8, les bras de liaison sont conçus pour s'accoupler avec des adaptateurs 300 (avant) et 310 (arrière) fixés sur le cadre 21 du vélo 2. Ces adaptateurs consistent en un adaptateur principal 300 et en un adaptateur secondaire 310. L'adaptateur principal 300 est fixé sur la colonne de direction 26 du cadre 21. Dans des modes de réalisation, l'adaptateur principal 300 comporte un système d'éclairage de la route 3000 que l'utilisateur peut activer lorsque le vélo 2 n'est pas couplé avec la structure complémentaire 1.

Tel qu'illustré par la figure 7, l'adaptateur secondaire 310 est couplé sur le cadre 21 du vélo 2, par exemple en dessous de la selle 22.

En référence à la figure 8, dans des modes de réalisation, les moyens de couplage 3 sont configurés pour permettre un débattement selon un axe vertical du vélo 2 dans la structure complémentaire 1. Le bras de liaison avant 30 est notamment conçu mobile selon un axe vertical pour permettre l'adaptation de vélos 2 de différentes dimensions à l'intérieur de la structure complémentaire 1. Selon cette conception, le bras de liaison avant 30 est associé à un vérin qui optimise la fixation.

Ce bras de liaison 30 est également conçu pour empêcher toute torsion du vélo 2 par rapport à la structure complémentaire 1 autour d'un axe longitudinal de la structure complémentaire 1 ainsi que toute torsion du vélo 2 par rapport àla structure complémentaire 1 autour d'un axe vertical situé au niveau de la colonne de direction 26 du vélo 2.

A cet effet, le bras de liaison arrière 31 coopère avec le bras de liaison avant 30 pour limiter les efforts de torsion appliqués à la fixation sur la colonne de direction 26. Ces deux bras de liaison permettent également de garantir le bon alignement du vélo 2 par rapport à la structure complémentaire 1.

Le bras de liaison arrière 31 est conçu réglable en longueur par coulissement, et réglable en hauteur pour permettre le couplage de vélos de dimensions différentes.

Tel qu'illustré par la figure 6, l'adaptateur principal 300 comporte un dispositif électronique d'identification 50 comportant un identifiant. En référence à la figure 1, la structure complémentaire 1 comporte alors un dispositif électronique complémentaire 51 apte à reconnaître l'identifiant et autoriser le couplage du vélo 2 au châssis 11 par l'intermédiaire des moyens de couplage 3. Le dispositif électronique d'identification 50 peut comporter une étiquette électronique (en anglais « tag ») mettant en œuvre le protocole NFC (acronyme de Near Field Communication, pour communication en champ proche) ou le protocole RFID (acronyme de RadioFrequence IDentification pour identification radiofréquence).

Dans des modes de réalisation où les moyens de détection d'un actionnement du pédalier 24 comportent un capteur de rotation à installer sur le vélo 2, l'adaptateur principal 300 et le bras de liaison comportent des connectiques complémentaires aptes à établir une connexion électrique entre le capteur de rotation du pédalier 24 et chaque moteur 40 de l'assistance électrique 4 lors du couplage du vélo 2 au châssis 11 de la structure complémentaire 1.

Dans des modes de réalisation, les moyens de détection comportent un capteur de rotation incorporé au vélo 2. Par exemple, un tel capteur est intégré dans les vélos à assistance électrique. La combinaison des assistances électriques du vélo et de la structure complémentaire assure un meilleur confort à l'utilisateur.

Dans des modes de réalisation, l'adaptateur et le bras de liaison comportent des connectiques complémentaires aptes à établir une connexion entre le capteur de rotation et la commande de chaque moteur électrique 40 lors du couplage du vélo 2 au châssis 11 par l'intermédiaire des moyens de couplage 3.

Dans des modes de réalisation, l'adaptateur et le bras de liaison comportent des connectiques complémentaires aptes à établir une connexion entre une poignée de commande de motorisation d'un guidon 23 du vélo 2 et la commande de chaque moteur électrique 40 lors du couplage du vélo 2 au châssis 11 par l'intermédiaire des moyens de couplage 3. Ainsi, un vélo à motorisation électrique ou vélomoteur électrique peut bénéficier des avantages des structures complémentaires objets de l'invention.

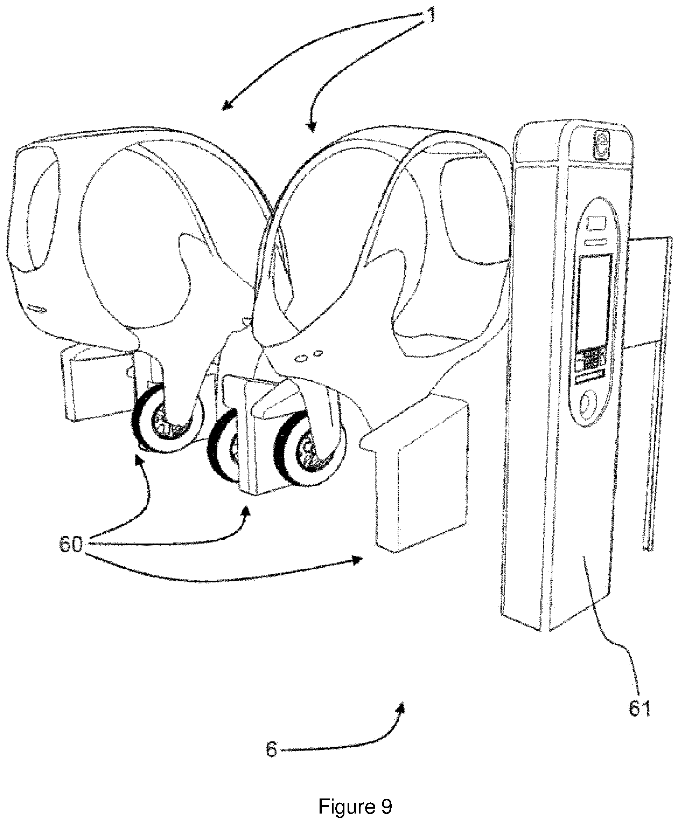

Comme on l'observe en figure 9, la structure complémentaire 1 peut être stationnée dans une station 6 en l'attente de couplage avec un vélo 2.

Une telle station 6 de mise à disposition de structures complémentaires 1 comporte :
- des plots d'attache 60 de structures complémentaires 1, ces plots d'attache 60 étant aptes à maintenir des structures complémentaires 1 dans une position d'attente de couplage à un vélo 2 ; et
- un dispositif électronique 61 de mise à disposition d'une structure complémentaire 1 apte à libérer une structure complémentaire 1 par un plot d'attache 60.

Dans des modes de réalisation, la station 6 comportent une liaison au réseau électrique public ou, préférentiellement, un système de production d'énergie électrique tel que des panneaux photovoltaïques aptes à recharger les batteries électriques des structures complémentaires attachées au plot d'attache 60 et/ou à alimenter le dispositif électronique 61.

Dans des modes d'utilisation d'une station 6 et d'unestructure complémentaire 1 selon l'invention, un cycliste arrivant à proximité d'une station 6 avec son vélo 2 peut insérer son vélo 2 dans l'espace d'accueil 12 d'une structure complémentaire 1.

A cet effet, le plot d'attache 60 maintient la structure complémentaire dans la position que la structure complémentaire présente pendant son roulement en coopération avec un vélo 2.

Suite à cette insertion, la structure complémentaire 1 reconnait le vélo 2 à l'aide du dispositif électronique d'identification (l'étiquette électronique implantée dans l'adaptateur principal 30 préalablement installé sur le vélo 2). Cette reconnaissance permet au cycliste de coupler son vélo 2 à la structure complémentaire 1.

Une fois le vélo 2 couplé à l'intérieur de la structure complémentaire 1, la structure complémentaire 1 peut être libérée de son plot d'attache 60, sous le contrôle du dispositif électronique 61.

Le dispositif électronique d'identification (l'étiquette électronique) peut également servir de puce antivol pour le vélo 2. En effet, cette puce antivol permet de rendre compatible un vélo 2 avec une structure complémentaire. Dans le cas où le vélo 2 est signalé volé, cette puce peut signaler le vélo 2 et par exemple permettre sa capture à l'intérieur d'une structure complémentaire 1 en empêchant le découplage du vélo 2, ainsi qu'en déclenchant une alerte.

Dans des modes de réalisation, la station ne comporte qu'un seul plot d'attache 60 et chaque structure complémentaire comporte un moyen d'attache d'une autre structure complémentaire. On constitue ainsi une chaîne de structures complémentaires, on simplifie la station 6 et on réduit l'emprise au sol pour un même nombre de structures complémentaires. Ainsi, lorsqu'un utilisateur arrive avec un vélo 2, il couple son vélo 2 à la structure complémentaire en extrémité de la chaîne. Au contraire, lorsqu'un utilisateur arrive avec un vélo 2 muni d'une structure complémentaire, il attache celle-ci en extrémité de chaîne.

Dans des modes de réalisation, l'adaptateur à demeure sur le vélo comporte un dispositif électronique d'identification comportant un identifiant, le dispositif électronique 61 de mise à disposition étant apte à reconnaître l'identifiant et à :
- autoriser le couplage du vélo 2 au châssis 11 par l'intermédiaire des moyens de couplage 3 et/ou
- libérer la structure complémentaire 1 du plot d'attache 60.

Dans des modes de réalisation, le dispositif électronique de mise à disposition comporte un moyen de communication avec un terminal portable communicant pour autoriser le couplage du vélo au châssis par l'intermédiaire des moyens de couplage et/ou la libération d'une structure complémentaire par un plot d'attache 60, en fonction des informations échangées avec le terminal mobile communicant. Ces informations permettent d'identifier l'utilisateur du vélo 2 et, éventuellement, un abonnement aux services offerts par la station 6.

Dans des modes de réalisation, la structure complémentaire 1 est pourvue de modules de communication sans fil (par exemple un module mettant en œuvre un standard de communication Bluetooth, marque déposée) et/ou de modules de géolocalisation (non représentés). Avantageusement, de tels modules sont configurés pour permettre une interaction avec l'ordiphone de l'utilisateur d'une structure complémentaire 1, notamment pour permettre une location de la structure complémentaire 1 dans le cadre d'un système de mobilité urbain.

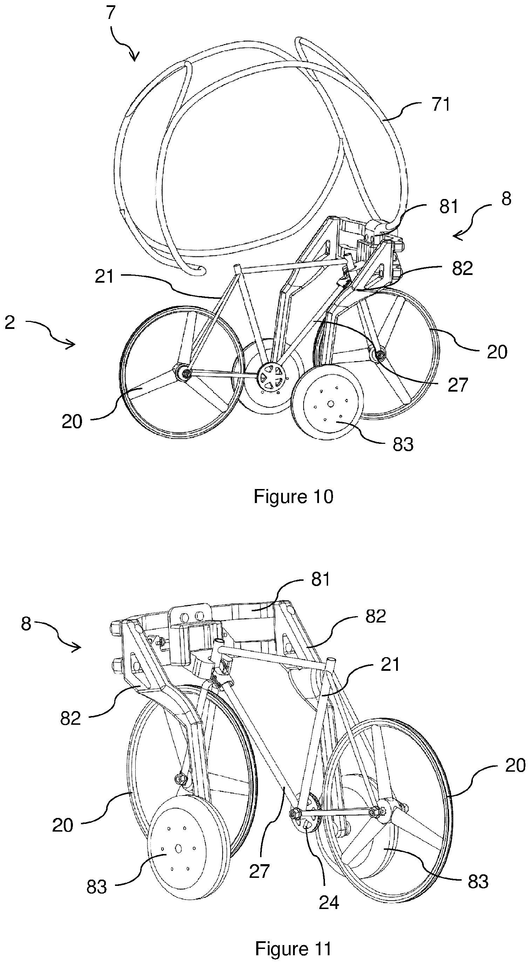

On observe, en figures 10 à 12, une structure complémentaire 7 installée sur le vélo 2. Cette structure complémentaire comporte un châssis 8 et une armature 71 (non représentée en figure 11) supportant des éléments de carénage (non représentés).

Le châssis 8 comporte des bras latéraux 82 portant les roues additionnelles 83, et un assemblage déformable 81 solidaire du cadre 21 du vélo, la déformation de l'assemblage déformable correspondant à un mouvement relatif des bras latéraux conservant les bras latéraux parallèles au plan du cadre du vélo et à l'inclinaison des roues additionnelles 83 parallèlement aux roues 20 du vélo.

Dans le mode de réalisation illustré en figures 10 à 12, l'assemblage déformable comporte des parallélogrammes formés de bras montés mobiles en rotation autour d'axes de rotation parallèle à la direction de déplacement du vélo.

Le châssis 8 comporte ainsi, deux parallélogrammes 81 portant, chacun un bras latéral 82 qui se termine par une roue 83. Chaque parallélogramme 81 est constitué de deux bras parallèles horizontaux 85, chacun monté en rotation autour d'un axe de rotation 86 solidaire des moyens de couplage au vélo, horizontal et dans le plan du cadre 21. Les bras parallèles horizontaux 85 sont, à leur autre extrémité, chacun, monté en rotation autour d'un axe de rotation 87 solidaire des bras latéraux 82, horizontal et dans le plan du cadre 21.

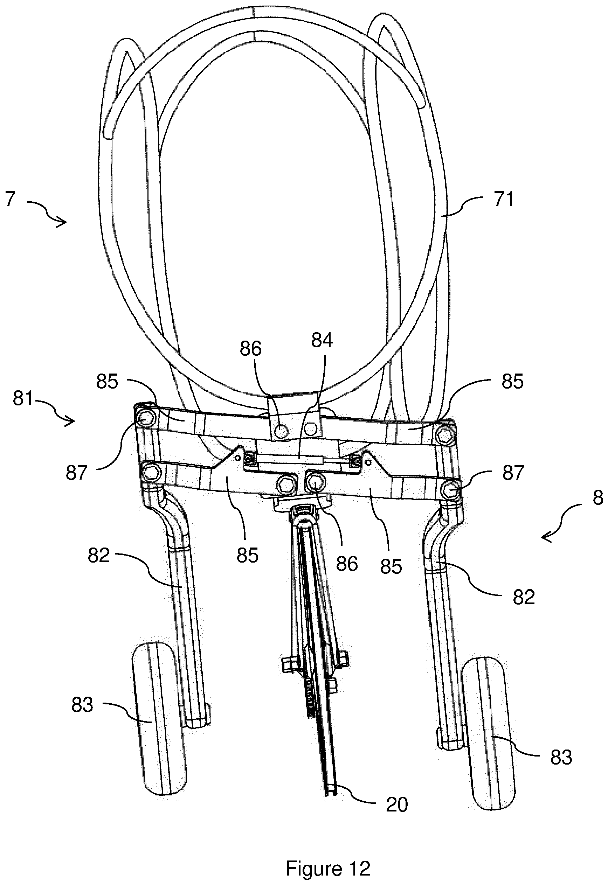

Le châssis 8 est ainsi configuré pour que les roues additionnelles 83 s'inclinent parallèlement aux roues 20 du vélo 2, comme illustré en figure 12. De plus, un ressort en contraction 84, par exemple un vérin, applique une force sur les bras horizontaux 85 inférieurs dans le sens augmentant la force exercée par chaque roue 83 sur le sol. Cette force augmente l'adhérence des roues motrices 83 tout en les laissant indépendantes pour suivre les irrégularités de la chaussée.

Les bras 82 comportent les batteries d'alimentation des moteurs électriques intégrés aux roues 83.

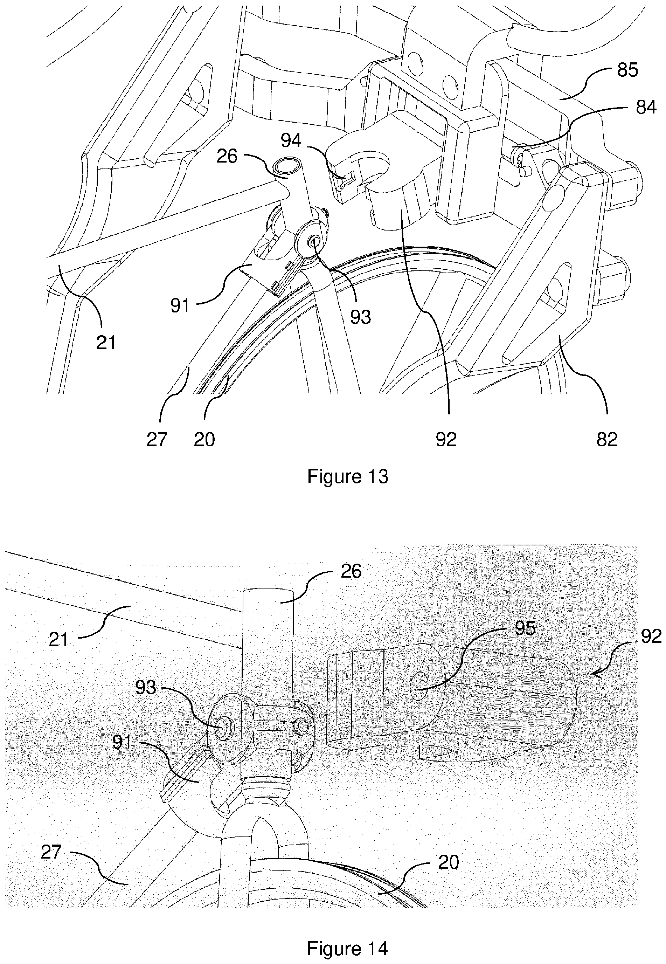

On observe, en figures 13 et 14, selon deux perspectives, un système de couplage en deux adaptateurs 91 et 92. L'adaptateur 91 comporte deux parties cylindriques dont les axes sont coplanaires. Une première partie cylindrique est montée sur le tube oblique 27. Une deuxième partie cylindrique entoure la colonne de direction 26 du cadre 21. Préférentiellement, les deux parties cylindriques de l'adaptateur 91 sont mobiles l'une par rapport à l'autre pour s'adapter à différentes formes de cadres 21. L'axe de rotation respectif des deux parties cylindriques passe par deux plots cylindriques 93 latéraux, à droite et à gauche de la colonne de direction 26.

L'adaptateur 92 est une pièce mobile en rotation sur un axe horizontal du châssis 8. Par exemple, un arbre solidaire du châssis 8 traverse une ouverture horizontale 95 de l'adaptateur 92. L'adaptateur 92 comporte deux rainures 94 pour accueillir les plots 93 de l'adaptateur 91. Préférentiellement, chaque plot 93 présentent une tête de diamètre plus important que le reste du plot 93 et les rainures 94 présentent une section en correspondance, pour mieux retenir les plots 93.

Ainsi, le couplage entre le vélo 2 et la structure complémentaire 7 conserve un degré de liberté, en rotation par rapport à un axe horizontal perpendiculaire au plan du cadre 21. Ce degré de liberté permet une meilleure adaptation à la chaussée, notamment si elle est déformée.

Préférentiellement, un troisième plot de l'adaptateur 91 s'enclenche dans une ouverture femelle pour verrouiller le couplage.

Dans des modes de réalisation, les moyens de couplage du vélo 2 à une structure complémentaire ne comporte qu'un seul adaptateur d'accroche au cadre du vélo. Par exemple cet adaptateur forme une pince qui enserre une partie du cadre 21 du vélo, par exemple la colonne de direction 26 ou le tube oblique 27.

Dans des modes de réalisation (non représentés), la séparation du vélo 2 de la structure complémentaire ne peut être effectuée que dans une station 6 de mise à disposition de structures complémentaires. A cet effet, un système de verrou mécanique ou électrique commandé par une partie de la station 6, par exemple après reconnaissance d'un identifiant de structure complémentaire portée par une étiquette électronique, peut être utilisé.

Dans des modes de réalisation, la structure complémentaire comporte des moyens autonomes de détection de besoin d'assistance électrique. A cet effet, la structure complémentaire peut comporter un détecteur des oscillations latérales du cycliste lors de l'effort de pédalage alternatif sur les pédales droite et gauche. Dans des modes de réalisation, la structure complémentaire peut comporter un détecteur des oscillations de la roue avant 20 du vélo 2 lors de l'effort de pédalage du cycliste. Dans des modes de réalisation, la structure complémentaire comporte un capteur de la force exercée sur l'adaptateur du châssis de la structure complémentaire et l'assistance électrique est commandée pour réduire la composante longitudinale (dans l'axe de déplacement du vélo) de cette force, voire de l'annuler, après passage dans un filtre passe-bas retirant les basses fréquences, par exemple inférieures à un. On compense ainsi la résistance exercée par la structure complémentaire.

Dans des modes de réalisation, la motorisation des roues additionnelles est commandée indépendamment du pédalage par l'utilisateur. Par exemple, une poignée incorporée à la structure complémentaire permet de commander cette motorisation.

Dans des modes de réalisation, l'identifiant de l'utilisateur et/ou de son vélo est effectuée par échange entre un terminal portable communicant, par exemple un ordiphone, et soit la structure complémentaire, soit le dispositif électronique 61. Une application fonctionnant sur un ordiphone permet ainsi de libérer une structure complémentaire de la station 6.

Dans des modes de réalisation, les éléments de carénage sont réalisés en matériaux composites, par exemple en ABS (acronyme de acrylonitrile butadiène styrène, un polymère thermoplastique) renforcé avec des fibres.

## Revendications

1. Station (6), comportant:
- au moins une structure complémentaire (1, 7) pour un vélo (2) comportant au moins deux roues (20), ladite au moins une structure complémentaire comportant :
- au moins une roue additionnelle (10, 83),
- un châssis (11, 8) sur lequel est couplée ladite au moins une roue additionnelle ;
- des moyens de couplage (3, 92) portés par le châssis et aptes à coupler de manière réversible le vélo au châssis,
le châssis comportant un espace d'accueil (12) du vélo dans lequel les moyens de couplage sont aptes à solidariser ensemble le châssis au vélo;
- au moins un plot d'attache (60) à ladite au moins une structure complémentaire, ledit au moins un plot d'attache étant apte à maintenir ladite au moins une structure complémentaire dans une position d'attente de couplage audit vélo ;
la station étant **caractérisée par** :
- au moins un dispositif électronique de mise à disposition (61) de ladite au moins une structure complémentaire apte à entrainer la libération de ladite au moins une structure complémentaire par ledit au moins un plot d'attache une fois le vélo couplé à l'intérieur de l'espace d'accueil du châssis de ladite au moins structure complémentaire par les moyens de couplage.

2. Station selon la revendication 1, dans laquelle ladite au moins une structure complémentaire (1, 7) comporte au moins un élément de carénage (13, 71, 110) entourant au moins partiellement l'espace d'accueil.

3. Station selon la revendication 2, dans laquelle ledit au moins un élément de carénage ceinture l'espace d'accueil (12) jusqu'à un passage d'insertion (120) du vélo (2) pour l'engager dans l'espace d'accueil.

4. Station selon l'une quelconque des revendications 1 à 3, dans laquelle les moyens de couplage (3) sont configurés pour permettre un débattement selon un axe vertical du vélo (2) dans ladite au moins une structure complémentaire.

5. Station selon l'une des revendications 1 à 4, dans laquelle les moyens de couplage comportent un adaptateur d'accroche au cadre (21) du vélo (2).

6. Station selon l'une des revendications 1 à 5, dans laquelle les moyens de couplage (3) comportent au moins un bras de liaison (30) s'étendant à partir du châssis (11) pour s'accoupler avec le cadre (21) du vélo (2).

7. Station selon la revendication 6, dans laquelle ledit au moins un bras de liaison (30) est configuré pour s'accoupler avec un adaptateur (300) fixé à demeure sur le cadre (21) du vélo (2).

8. Station selon la revendication 7, dans laquelle l'adaptateur (300) comporte un dispositif électronique d'identification (50) comportant un identifiant, le dispositif électronique (61) de mise à disposition étant apte à reconnaître l'identifiant et à autoriser le couplage du vélo (2) au châssis (11) par l'intermédiaire des moyens de couplage (3).

9. Station selon la revendication 7, dans laquelle l'adaptateur (300) comporte un dispositif électronique d'identification (50) comportant un identifiant, ladite au moins une structure complémentaire (1) comportant un dispositif électronique complémentaire (51) apte à reconnaître l'identifiant et à autoriser le couplage du vélo (2) au châssis (11) par l'intermédiaire des moyens de couplage (3).

10. Station selon l'une des revendications 1 à 9, dans laquelle le dispositif électronique (61) de mise à disposition comporte un moyen de communication avec un terminal portable communicant pour autoriser le couplage du vélo (2) au châssis (11) par l'intermédiaire des moyens de couplage (3) en fonction des informations échangées avec le terminal mobile communicant.

11. Station selon l'une des revendications 1 à 10, dans laquelle ladite au moins une structure complémentaire comporte une assistance électrique (4) au pédalage, l'assistance électrique comportant :
- au moins un moteur électrique (40) apte à entraîner en rotation ladite au moins une roue additionnelle (10) ;
- au moins une batterie électrique (41).

12. Station selon la revendication 11, dans laquelle ladite au moins une structure complémentaire comporte des moyens de détection d'un actionnement d'un pédalier (24) du vélo.

13. Station selon l'une des revendications 7 à 9, et selon la revendication 12, dans laquelle les moyens de détection comportent un capteur de rotation de pédalier (24) à installer sur le vélo (2) ou un capteur de rotation incorporé au vélo (2), l'adaptateur et le bras de liaisor comportant des connectiques complémentaires aptes à établir une connexion entre le capteur de rotation et la commande de l'au moins un moteur électrique (40) lors du couplage du vélo (2) au châssis (11) par l'intermédiaire des moyens de couplage (3).

14. Station selon l'une des revendications 7 à 9 et selon la revendication 11, dans laquelle l'adaptateur et le bras de liaison comportent des connectiques complémentaires aptes à établir une connexion entre une poignée de commande de motorisation d'un guidon (23) du vélo (2) et la commande de l'au moins un moteur électrique (40) lors du couplage du vélo (2) au châssis (11) par l'intermédiaire des moyens de couplage (3).

15. Station selon l'une des revendications 1 à 14, dans laquelle le châssis (8) comporte des bras latéraux (82) portant chacun une desdites roues additionnelles (83), et un assemblage déformable (81) solidaire du cadre (21) du vélo (2) après couplage du vélo au châssis par l'intermédiaire des moyens de couplage, la déformation de l'assemblage déformable correspondant à un mouvement relatif des bras latéraux conservant les bras latéraux parallèles au plan du cadre du vélo et à l'inclinaison des roues additionnelles (83) parallèlement aux roues (20) du vélo.

## Patentansprüche

1. Station (6), umfassend:
- wenigstens eine komplementäre Struktur (1,7) für ein Fahrrad (2), umfassend wenigstens zwei Räder (20), wobei die wenigstens eine komplementäre Struktur umfasst:
- wenigstens ein zusätzliches Rad (10, 83),
- ein Gestell (11, 8), auf dem das genannte wenigstens eine zusätzliche Rad gekoppelt ist;
- Kopplungsmittel (3, 92), die vom Gestell getragen und zum reversiblen Koppeln des Fahrrads am Gestell geeignet sind,
wobei der Rahmen einen Aufnahmeraum (12) des Fahrrads umfasst, in dem die Kopplungsmittel zum festen Befestigen des Rahmens am Fahrrad geeignet sind;
- wenigstens einen Befestigungsklotz (60) an der wenigstens einen komplementären Struktur, wobei der wenigstens eine Befestigungsklotz zum Festhalten der genannten wenigstens einen komplementären Struktur in einer Kopplungswarte-Position an dem genannten Fahrrad geeignet ist;
wobei die Station **gekennzeichnet ist durch**:
- wenigstens eine elektronische Bereitstellungsvorrichtung (61) der genannten wenigstens einen komplementären Struktur, die zum Antreiben der Freisetzung der genannten wenigstens einen komplementären Struktur **durch** wenigstens einen Befestigungsklotz geeignet ist, nachdem das Fahrrad im Innen des Aufnahmeraums des Gestells der genannten wenigstens einen komplementären Struktur **durch** die Kopplungsmittel gekoppelt ist.

2. Station gemäß Anspruch 1, bei der die genannte wenigstens eine komplementäre Struktur (1, 7) wenigstens ein Verkleidungselement (13, 71, 110) umfasst, das den Aufnahmeraum wenigstens teilweise umgibt.

3. Station gemäß Anspruch 2, bei der das genannte wenigstens eine Verkleidungselement den Aufnahmeraum (12) bis zu einem Einfügedurchgang (120) des Fahrrads (2) einrahmt, um es in den Aufnahmeraum einzurasten.

4. Station gemäß irgendeinem der Ansprüche 1 bis 3, bei der die Kopplungsmittel (3) ausgestaltet sind, um ein Ausfedern gemäß einer vertikalen Achse des Fahrrads (2) in der genannten wenigstens einen komplementären Struktur zu ermöglichen.

5. Station gemäß einem der Ansprüche 1 bis 4, bei der die Kopplungsmittel einen Befestigungsadapter am Rahmen (21) des Fahrrads (2) umfassen.

6. Station gemäß einem der Ansprüche 1 bis 5, bei der die Kopplungsmittel (3) wenigstens einen Verbindungsarm (30) umfassen, der ausgehend von dem Gestell (11) erstrecken, um sich an den Rahmen (21) des Fahrrads (2) anzukoppeln.

7. Station gemäß Anspruch 6, bei dem der genannte wenigstens eine Verbindungsarm (30) zum Koppeln mit einem Adapter (300) ausgestaltet ist, der dauerhaft am Rahmen (21) des Fahrrads (2) befestigt ist.

8. Station gemäß Anspruch 7, bei der der Adapter (300) eine elektronische Identifizierungsvorrichtung (50) umfasst, umfassend eine Kennung, wobei die elektronische Bereitstellungsvorrichtung (61) geeignet ist, um die Kennung wiederzuerkennen und das Koppeln des Fahrrads (2) am Gestell (11) mittels Kopplungsmitteln (3) zu erlauben.

9. Station gemäß Anspruch 7, bei der der Adapter (300) eine elektronische Identifizierungsvorrichtung (50) umfasst, umfassend eine Kennung, wobei die genannte wenigstens eine komplementäre Struktur (1) eine elektronische Bereitstellungsvorrichtung (51) umfasst, die geeignet ist, um die Kennung wiederzuerkennen und das Koppeln des Fahrrads (2) am Gestell (11) mittels Kopplungsmitteln (3) zu erlauben.

10. Station gemäß einem der Ansprüche 1 bis 9, bei der die elektronische Bereitstellungsvorrichtung (61) ein Kommunikationsmittel mit einem kommunizierenden tragbaren Terminal umfasst, um das Koppeln des Fahrrads (2) am Gestell (11) mittels der Kopplungsmittel (3) in Abhängigkeit von den mit dem kommunizierenden mobilen Terminal ausgetauschten Informationen zu erlauben.

11. Station gemäß einem der Ansprüche 1 bis 10, bei der die genannte wenigstens eine komplementäre Struktur eine elektrische Tretunterstützung (4) umfasst, wobei die elektrische Unterstützung umfasst:
- wenigstens einen Elektromotor (40), der zum Antreiben des wenigstens einen zusätzliches Rades (10) in Rotation geeignet ist;
- wenigstens eine Elektrobatterie (41).

12. Station gemäß Anspruch 11, bei der die genannte wenigstens eine komplementäre Struktur Detektionsmittel einer Betätigung eines Tretlagers (24) des Fahrrads umfasst.

13. Station gemäß einem der Ansprüche 7 bis 9 und gemäß Anspruch 12, bei der die Detektionsmittel einen auf dem Fahrrad (2) zu installierenden Tretwerk-Rotationssensor (24) oder einen im Fahrrad (2) eingebauten Rotationssensor umfassen, wobei der Adapter und der Verbindungsamt komplementäre Anschlusstechniken umfassen, die geeignet sind, um einen Anschluss zwischen dem Rotationssensor und der Steuerung des wenigstens einen Elektromotors (40) beim Koppeln des Fahrrads (2) am Gestell (11) mittels Kopplungsmitteln (3) aufzubauen.

14. Station gemäß einem der Ansprüche 7 und 9 und gemäß Anspruch 11, bei der der Adapter und der Verbindungsarm komplementäre Anschlusstechniken umfassen, die zum Aufbauen eines Anschlusses zwischen einem Steuergriff der Motorisierung eines Lenkers (23) des Fahrrades (2) und der Steuerung des wenigstens einen Elektromotors (40) beim Koppeln des Fahrrads (2) am Gestell (11) mittels Kopplungsmitteln (3) geeignet sind.

15. Station gemäß einem der Ansprüche 1 bis 14, bei der das Gestell (8) seitliche Arme (82), die jeweils eines der genannten zusätzlichen Räder (83) tragen, und eine verformbare Anordnung (81), die nach dem Koppeln des Fahrrads am Gestell mittels der Kopplungsmittel fest mit dem Rahmen des Fahrrads (2) verbunden ist, umfasst, wobei die Verformung der verformbaren Anordnung einer relativen Bewegung der seitlichen Arme entspricht, die die seitlichen Arme parallel zur Ebene des Rahmens des Fahrrads und zur Neigung der zusätzlichen Räder (83) parallel zu den Rädern (20) des Fahrrads beibehält.

## Claims

1. Station (6) comprising:
- at least one additional structure (1, 7) for a bike (2) comprising at least two wheels (20), said at least one additional structure comprising:
- at least one additional wheel (10, 83);
- a chassis (11, 8) to which said at least one additional wheel is coupled;
- coupling means (3, 92) borne by the chassis and able to couple the bike reversibly to the chassis,
the chassis comprising a mounting space (12) for the bike wherein the coupling means are able to secure the chassis to the bike;
- at least one attachment terminal (60) for attaching to said at least one additional structure, said at least one attachment terminal being able to keep said at least one additional structure in a position waiting to be coupled to said bike;
the station being **characterized by**:
- at least one electronic provision device (61) for making said at least one additional structure available, able to cause said at least one additional structure to be released by said at least one attachment terminal once the bike is coupled by the coupling means to the inside of the mounting space of the chassis of said at least one additional structure.

2. Station according to claim 1, wherein said at least one additional structure (1, 7) comprises at least one shell element (13, 71, 110) enclosing the mounting space at least partially.

3. Station according to claim 2, wherein said at least one shell element encircles the mounting space (12) up to an insertion passage (120) of the bike (2) for engaging it in the mounting space.

4. Station according to any one of claims 1 to 3, wherein the coupling means (3) are configured to enable travel along a vertical axis of the bike (2) in said at least one additional structure.

5. Station according to one of claims 1 to 4, wherein the coupling means comprise an attachment adapter for attaching to the frame (21) of the bike (2).

6. Station according to one of claims 1 to 5, wherein the coupling means (3) comprise at least one link arm (30) extending from the chassis (11) for couple with the frame (21) of the bike (2).

7. Station according to claim 6, wherein said at least one link arm (30) is configured to couple with an adapter (300) fixed to the frame (21) of the bike (2).

8. Station according to claim 7, wherein the adapter (300) comprises an electronic identification device (50) comprising an identifier, the electronic provision device (61) being able to recognize the identifier and authorize the coupling of the bike (2) to the chassis (11) by means of the coupling means (3).

9. Station according to claim 7, wherein the adapter (300) comprises an electronic identification device (50) comprising an identifier, said at least one additional structure (1) comprising an additional electronic device (51) able to recognize the identifier and to authorize the coupling of the bike (2) to the chassis (11) by means of the coupling means (3).

10. Station according to one of claims 1 to 9, wherein the electronic provision device (61) comprising a means for communicating with a communicating mobile terminal for authorizing the coupling of the bike (2) to the chassis (11) by means of the coupling means (3) as a function of information exchanged with the communicating mobile terminal.

11. Station according to one of claims 1 to 10, wherein said at least one additional structure comprises an electric pedal assistance (4), the electric assistance comprising:
- at least one electric motor (40) able to drive said at least one additional wheel (10) in rotation;
- at least one electrical battery (41).

12. Station according to claim 11, wherein said at least one additional structure comprises detection means for detecting actuation of a pedal (24) of the bike.

13. Station according to one of claims 7 to 9 and according to claim 12, wherein the detection means comprise a pedal (24) rotation sensor to be installed on the bike (2), or a rotation sensor incorporated into the bike (2), the adapter and the link arm comprising additional connectors able to establish a connection between the rotation sensor and the control unit of the at least one electric motor (40) when the bike (2) is coupled to the chassis (11) by means of the coupling means (3).

14. Station according to one of claims 7 to 9 and according to claim 11, wherein the adapter and the link arm comprise additional connectors able to establish a connection between a motorization control handle of a handlebar (23) of the bike (2) and the control unit of the at least one electric motor (40) when the bike (2) is coupled to the chassis (11) by means of the coupling means (3).

15. Station according to one of claims 1 to 14, wherein the chassis (8) comprises side arms (82), each bearing one of said additional wheels (83), and a deformable assembly (81) secured to the frame (21) of the bike (2) after the bike is coupled to the chassis by means of the coupling means, the deformation of the deformable assembly corresponding to a relative movement of the side arms keeping the side arms parallel to the plane of the bike and to the inclination of the additional wheels (83) parallel to the wheels (20) of the bike.
